# FASCICULE DE BREVET EUROPEEN

(11) **EP 0 434 500 B1**
(45) Date de publication et mention de la délivrance du brevet: **03.11.1993**
(21) Numéro de dépôt: 90403530.0
(22) Date de dépôt: 11.12.1990
(51) Int. Cl.: B60P 1/64, B60P 7/13

(54) **Potence de manutention à dispositif de verrouillage de charge amovible**
Ausleger für Handhabungseinrichtung mit einer Sperrvorrichtung für abnehmbare Lasten
Handling job with a locking device for removable loads

(30) Priorité: 22.12.1989 FR 8917130
(43) Date de publication de la demande: 26.06.1991
(73) Titulaire: MARREL, F-42160 Andrézieux-Bouthéon (FR)
(72) Inventeur: Lambert, Bernard, F-71960 Chevagny Les Chevrières (FR); Héritier, Albert, F-42340 Veauche (FR)
(74) Mandataire: Rinuy, Santarelli

(56) Documents cités:
- FR-A- 2 358 352
- US-A- 3 370 550

## Description

L'invention concerne le verrouillage de caisses, berces, conteneurs ou analogues sur le dispositif de manutention du type potence servant à leur chargement ou à leur déchargement sur le châssis d'un véhicule industriel tel qu'un camion.

Ainsi qu'on le sait, un dispositif de manutention du type potence comporte tout d'abord un bras inférieur articulé à l'arrière du châssis du véhicule autour d'un axe transversal et adapté en configuration de repos du dispositif de manutention à prendre une position horizontale longitudinale orientée vers l'avant du véhicule. A l'extrémité avant de ce bras inférieur se raccorde un bras vertical terminé à son extrémité supérieure par un crochet de préhension adapté à venir en prise avec un barreau ou anneau prévu à l'avant de la caisse, berce, conteneur ou analogue à charger ou à décharger. Un ou plusieurs vérins sont prévus pour commander le basculement des bras vers l'arrière.

Pour minimiser l'inclinaison maximale de la caisse, berce ou conteneur lors de son déchargement ou de son chargement, il est connu de dissocier le bras inférieur en deux tronçons avant et arrière mobiles entre eux. Ainsi le document FR-A-2.185.520 a proposé deux tronçons articulés entre eux autour d'un axe transversal, de mêmes vérins permettant, en phase de déchargement (et l'inverse au chargement), un pivotement du tronçon avant vers l'arrière par rapport au tronçon arrière (parfois appelé "biellette") jusqu'à une position de butée contre ce dernier, puis un pivotement vers l'arrière de l'ensemble de ces deux bras autour de l'axe transversal arrière.

Un autre exemple de dissociation du bras inférieur en deux tronçons est donné par le document FR-A-2 109.109, faisant intervenir un coulissement du tronçon avant dans le tronçon arrière.

En configuration de chargement on a cherché, pour solidariser au mieux la caisse, berce ou conteneur sur le châssis du véhicule industriel, à verrouiller cette caisse, berce ou ce conteneur sur le tronçon arrière du bras de potence, tenant compte du fait qu'un verrouillage à l'avant est assuré par le crochet de préhension.

Divers types de verrouillage ont été mis au point à cet effet. Ainsi on distingue :
- un verrouillage préconisé par les normes AFNOR faisant intervenir des arceaux solidaires du tronçon arrière et adaptés à être traversés par des doigts longitudinaux prévus sous la caisse, berce ou analogue et orientés vers l'avant ;
- un verrouillage préconisé par les normes DIN faisant intervenir, à l'inverse, des doigts latéraux ou broches solidaires du tronçon arrière, latéralement à l'écart de ce tronçon arrière, et orientés vers l'arrière, adaptés à traverser des arceaux prévus sous la berce, caisse ou analogue ;
- un verrouillage parfois repéré par la lettre ˝U˝ (pour Universel) faisant intervenir des griffes escamotables portées aux extrémités d'une traverse rapportée au tronçon arrière, et adaptées à venir coiffer transversalement, vers l'intérieur ou vers l'extérieur, les ailes horizontales inférieures des longerons en C ou I dont est munie la caisse, berce ou analogue.

Ces trois types de verrouillage nécessitent des aménagements spécifiques du tronçon arrière. Ainsi, par exemple, dans le cas du brevet FR-A-2.185.520 précité, les arceaux de verrouillage selon la version AFNOR sont portés par les sabots qui sont prévus sur le tronçon arrière pour la venue en butée du tronçon avant basculant ; les doigts latéraux de la version DIN sont portés par des extensions transversales rapportées sur les côtés du tronçon arrière en avant des sabots; enfin la traverse de la version U est rapportée au tronçon arrière en arrière des sabots.

Pour obtenir une bonne tenue mécanique de ces éléments de verrouillage surtout dans les cas des versions DIN et U où les organes de verrouillage proprement dit sont montés en porte-à-faux, ces éléments sont classiquement rapportés au tronçon arrière par soudage, donc de façon définitive, ce qui empêche qu'un même tronçon arrière puisse servir aux trois types de verrouillage : en effet on ne peut monter simultanément les trois types d'éléments de verrouillage compte tenu de leur incompatibilité (encombrement ...).

L'invention vise à pallier ces inconvénients grâce à un montage amovible quoique mécaniquement satisfaisant, sur un tronçon arrière de potence de manutention conforme au brevet FR-A-2.185.520, des éléments de verrouillage nécessaires respectivement aux trois types de verrouillage précités.

Elle propose à cet effet une potence de manutention adaptée au chargement et au déchargement d'une charge sur un véhicule industriel, comportant un bras inférieur comportant un tronçon arrière adapté à être articulé à l'arrière du châssis du véhicule autour d'un axe transversal à celui-ci et un tronçon avant articulé sur ce tronçon arrière autour d'un second axe transversal et portant en son extrémité avant un bras vertical terminé en son extrémité supérieure par un crochet de préhension adapté à venir en prise avec la charge, un dispositif de manoeuvre de ces bras, le tronçon arrière comportant deux sabots adaptés à recevoir en butée ce tronçon avant en une configuration basculée vers l'arrière de celui-ci et un dispositif de verrouillage pour l'assujettissement de la charge sur ce tronçon arrière, cette potence étant caractérisée en ce qu'elle comporte deux moyeux coaxiaux traversant transversalement ces sabots et une pluralité de paires de perçages disposées en arrière des sabots, ledit dispositif de verrouillage fixé de façon amovible à ce tronçon arrière, étant au choix :
- un dispositif comportant des arceaux en saillie vers le haut et liés aux sabots par des arbres traversant ces moyeux et adaptés à recevoir des doigts de verrouillage fixés sous la charge en saillie vers l'avant,
- un dispositif en U comportant une portion transversale fixée au tronçon arrière à la fois par des arbres traversant lesdits moyeux et par des boulons traversant au moins une paire de ladite pluralité de perçages, et des branches orientées vers l'avant et portant des griffes adaptées à venir en prise avec des organes complémentaires de verrouillage ménagés sous la charge,
- ou un dispositif comportant une traverse fixée au tronçon arrière par des boulons traversant au moins une paire de ladite pluralité de paire de perçages et munie en ses extrémités de doigts pivotants en porte-à-faux mobiles autour d'axes verticaux entre une configuration dans laquelle ils sont orientés longitudinalement et une configuration de verrouillage dans laquelle ils sont orientés transversalement l'un vers l'autre en sorte de pouvoir coiffer des ailes ménagées sous la charge.

Des objets, caractéristiques et avantages de l'invention ressortent de la description qui suit, donnée à titre d'exemple non limitatif, en regard des dessins annexés sur lesquels :
- la figure 1 est une vue schématique de côté d'un camion équipé d'une potence de manutention conforme au brevet FR-2.185.520 complétée selon l'invention ;
- la figure 2 en est une vue de détail montrant de côté le tronçon arrière de la potence de manutention équipé d'un élément de verrouillage AFNOR ;
- la figure 3 est une vue de dessus de ce tronçon arrière ;
- la figure 4 en est une vue partielle en coupe transversale selon la ligne IV-IV de la figure 3 ;
- la figure 5 est une vue de côté du tronçon arrière de la figure 1, équipé d'un élément de verrouillage selon la version DIN ;
- la figure 6 en est une vue de dessus ;
- la figure 7 est une vue de détail en coupe selon la ligne VII-VII de la figure 6 ;
- la figure 8 est une vue de côté du tronçon arrière de la figure 1, équipé d'un élément de verrouillage selon la version "universelle U˝ ;
- la figure 9 en est une vue de dessus ; et
- la figure 10 est une vue de détail en coupe selon la ligne X-X de la figure 9.

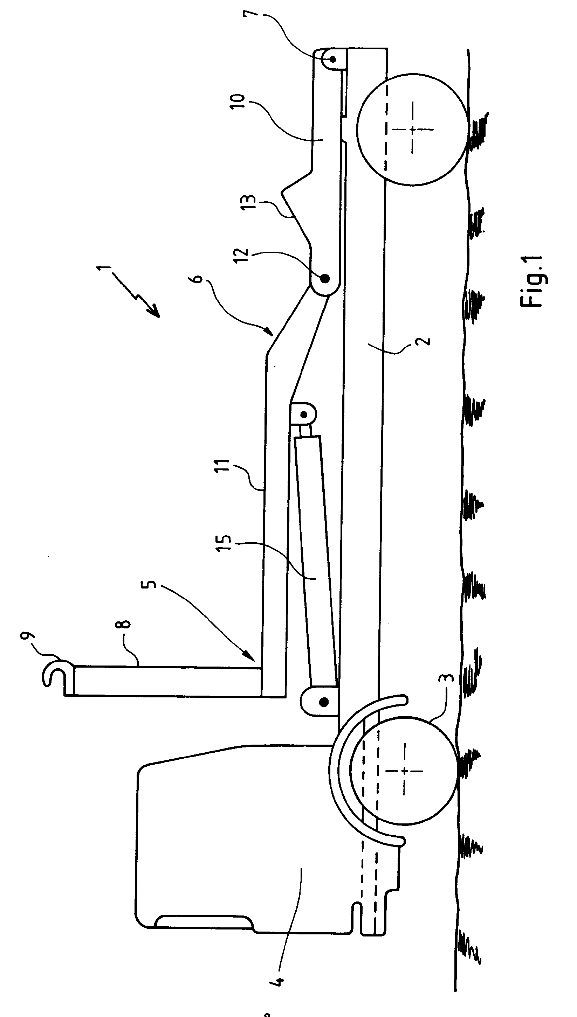

La figure 1 montre un camion 1 comportant un châssis 2 porté par des roues 3 et à l'avant duquel est montée une cabine 4.

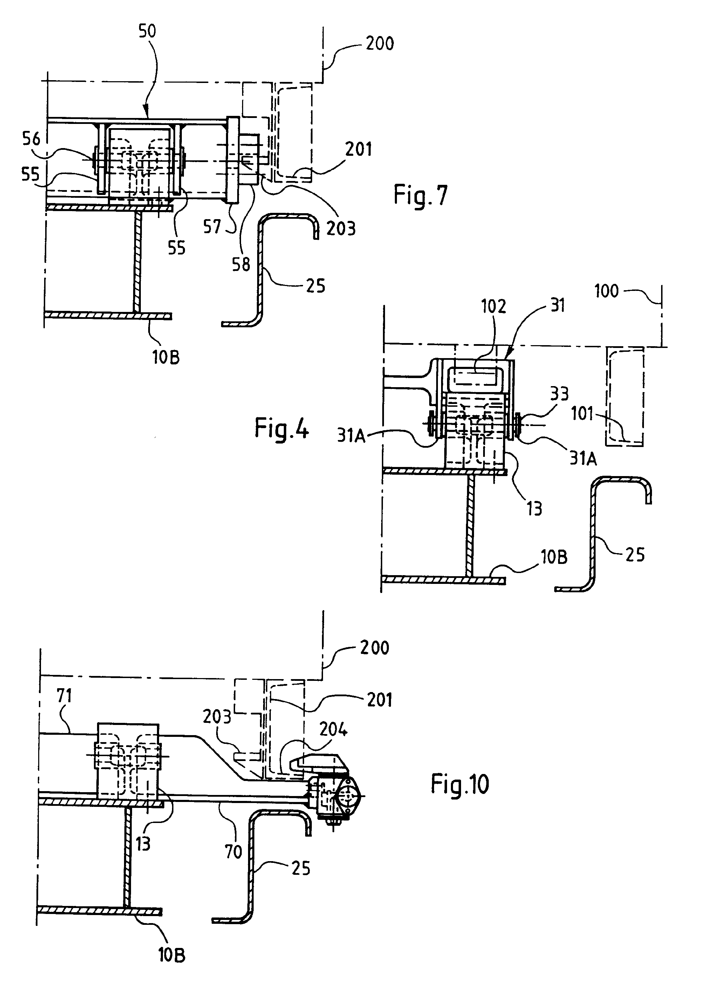

Sur ce châssis est montée une potence de manutention désignée dans son ensemble par la référence 5 et qui comporte, portés par un cadre de fixation au châssis (non représenté ici mais figuré aux figures 4, 7 et 10), un bras inférieur horizontal 6 articulé à l'arrière du châssis autour d'un axe transversal 7 et un bras vertical 8, lié à l'extrémité avant du bras horizontal 6 (il en est ici solidaire) et terminé en son extrémité supérieure par un crochet de préhension 9 adapté à coopérer avec un barreau ou anneau d'accrochage prévu à l'avant d'une charge à manipuler (non représentée).

Le bras horizontal 6 est formé d'un tronçon arrière 10 et d'un tronçon avant 11 articulés autour d'un axe transversal 12. Le tronçon avant 11 est mobile par rapport au tronçon arrière entre la configuration représentée dans laquelle les deux tronçons sont approximativement alignés et une configuration repliée (non représentée) dans laquelle le tronçon avant vient en butée contre des sabots 13 dont le tronçon arrière 10 est muni.

Un ou plusieurs vérins 15 sont prévus pour la manoeuvre de la potence 5.

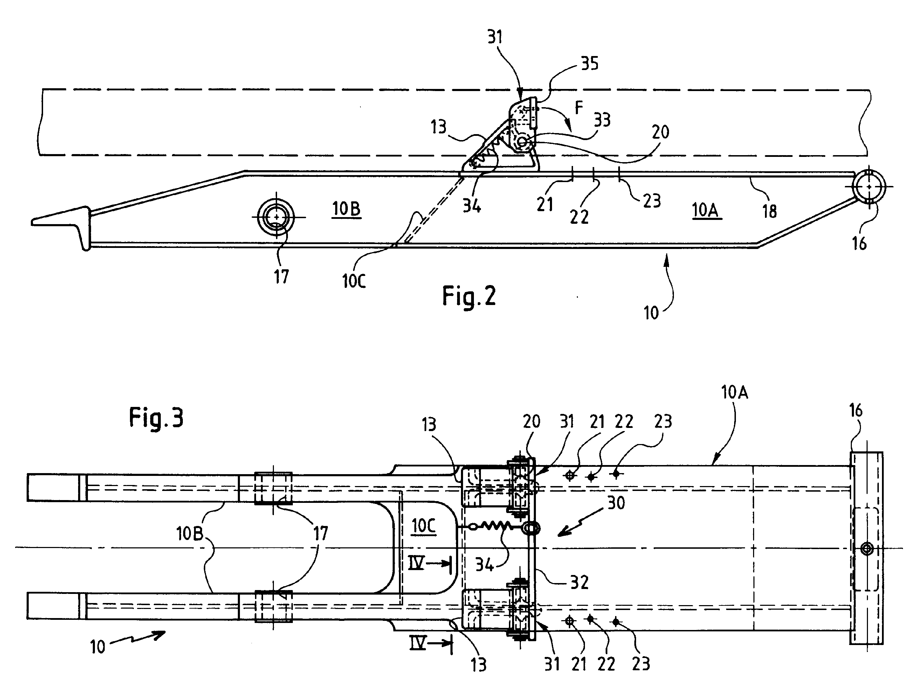

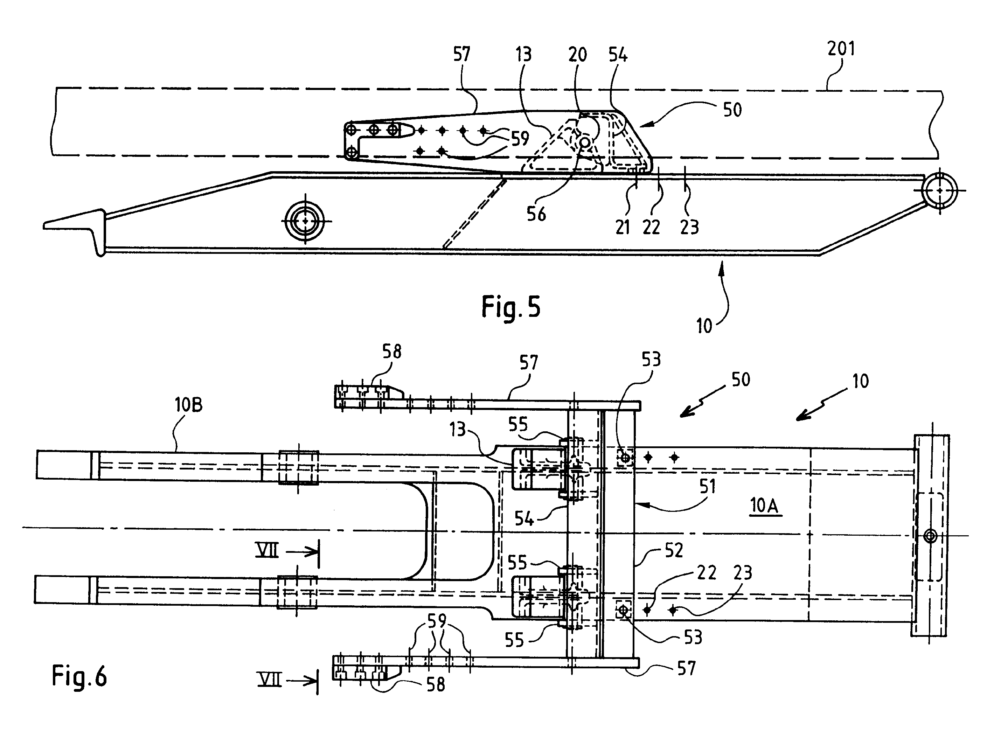

Le détail de la structure de ce tronçon arrière 10 apparaît aux figures 2 et 3 (et aux figures 5 et 6, et 8 et 9).

Le tronçon arrière 10 a la forme d'un U ouvert vers l'avant, avec une partie pleine arrière 10A raccordée à un moyeu 16 pour l'axe arrière 7 et deux branches 10B au travers desquelles sont prévus des moyeux 17 pour l'axe intermédiaire d'articulation 12.

Le fond 10C de ce U est incliné vers le haut et vers l'arrière pour participer avec les sabots 13 à l'appui du tronçon avant lorsque celui-ci est basculé vers l'arrière.

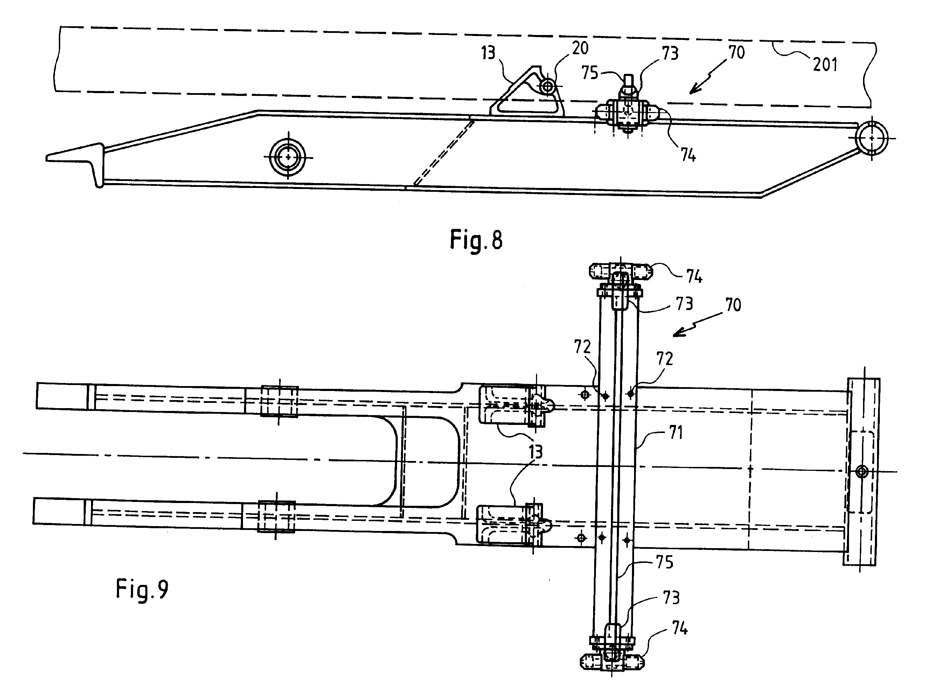

Selon l'invention, ce tronçon arrière 10 comporte à la fois des moyeux coaxiaux 20 traversant transversalement les sabots 13 (voir la figure 8) et des paires de perçages verticaux 21, 22 et 23 décalés longitudinalement et ménagés en arrière des sabots 13 (donc dans la partie "pleine" du tronçon 10), plus précisément dans des ailes horizontales latérales 18 dont ce tronçon est bordé longitudinalement. De la sorte ces perçages, ménagés symétriquement de part et d'autre d'un axe longitudinal du tronçon 10, sont adaptés à être traversés par des boulons dont l'extrémité inférieure est accessible depuis les côtés du tronçon 10.

Ce tronçon arrière 10, représenté nu à la figure 1, est ainsi adapté à recevoir de façon amovible l'un quelconque des trois systèmes de verrouillage 30, 50 et 70 respectivement représentés aux figures 2 à 4, 5 à 7, ou 8 à 10.

Le système de verrouillage 30 des figures 2 à 4 correspond à la version AFNOR.

Il comporte deux arceaux en U renversé 31 en saillie vers le haut (ici fermés), reliés par une barre 32 et dont les côtés 31A sont traversés en leurs extrémités inférieures par des arbres de pivotement 33 engagés dans les moyeux 20. Les arceaux 31 admettent une configuration rabattue vers l'arrière (flèche F) et une configuration active (représentée) dans laquelle ils sont élastiquement ramenés depuis la configuration rabattue et maintenus en butée contre des flancs des sabots par des éléments 34 de rappel élastique.

Dans l'exemple représenté les arceaux 31 et la barre 32 sont constitués par une même pièce transversale notée 35 dans son ensemble.

A la figure 4 est représentée en traits mixtes une charge 100 munie d'un longeron 101 et de doigts 102 pointant vers l'avant au travers des arceaux 31.

Le même tronçon 10 est équipé aux figures 5 à 7 du dispositif de verrouillage 50 qui correspond à la version DIN.

Ce système 50 a une forme en U ouverte vers l'avant avec une partie transversale 51 comportant un flanc horizontal 52 en appui sur la partie pleine 10A du tronçon 10 à laquelle elle est solidarisée par des boulons 53 traversant une paire 21 des alésages ménagés dans les ailes 18 de ce tronçon 10. Cette partie transversale comporte en outre une portion en cornière 54 coiffant les sabots et comportant deux paires de flancs 55 longeant latéralement ces sabots et traversés par des arbres 56 traversant les sabots à la faveur de leurs moyeux 20 qui participent ainsi aussi bien à la fixation du dispositif 30 que du dispositif 50.

Ce dispositif 50 comporte également des branches 57 raccordées à la partie transversale 51 et portant des broches formant griffes 58 adaptées à coopérer de façon connue avec des projections 202 portées en saillie transversalement vers l'intérieur par les longerons 201 d'une charge 200.

Ces broches 58 sont fixées par boulonnage aux branches 57. Des perçages additionnels 59 sont prévus pour permettre une fixation de ces broches en plusieurs positions relatives par rapport à ces branches.

Aux figures 8 à 10 le tronçon arrière 10 comporte le dispositif de verrouillage 70 qui correspond à la version U (ou universelle).

Ce dispositif 70 comporte une traverse 71 longeant la partie pleine 10A du tronçon arrière 10 à laquelle elle est assujettie par des boulons 72 traversant les paires de perçages 22 et 23.

Aux extrémités de cette traverse sont montés en porte-à-faux des doigts de verrouillage 73 articulés autour d'axes verticaux et mobiles entre une configuration longitudinale (non représentée) et une configuration de verrouillage dans laquelle ces doigts sont disposés transversalement l'un vers l'autre en sorte de venir coiffer l'aile inférieure 204 des longerons 201 (dans l'exemple représenté, il s'agit de la même charge 200 qu'aux figures 5 à 7).

Ces doigts de verrouillage 73 sont avantageusement commandés en rotation par des vérins rotatifs 74 de tout type connu approprié.

La référence 75 des figures 8 et 9 désigne une tôle verticale de renfort de la traverse 71.

Les cornières 25 aux figures 4, 7 et 10 figurent des flasques latéraux dont est muni le cadre de la potence de manutention 5.

En variante le nombre de paire de perçages peut être réduit à deux si, par exemple, on utilise les perçages 21 pour la fixation aussi bien du dispositif 50 que du dispositif 70. A l'inverse, ce nombre peut être supérieur à deux si on utilisé pour la fixation respectivement des dispositifs 50 et 70 des nombres de paires de perçages supérieure à ceux précédemment mentionnés. De même les arceaux du dispositif 30 peuvent être rigidement liés aux sabots sans possibilité de pivotement.

## Revendications

1. Potence de manutention adaptée au chargement et au déchargement d'une charge (100, 200) sur un véhicule industriel, comportant un bras inférieur (6) comportant un tronçon arrière (10) adapté à être articulé à l'arrière du châssis du véhicule autour d'un axe transversal à celui-ci et un tronçon avant (11) articulé sur ce tronçon arrière autour d'un second axe transversal (12) et portant en son extrémité avant un bras vertical (8) terminé en son extrémité supérieure par un crochet de préhension (9) adapté à venir en prise avec la charge, un dispositif de manoeuvre (15) de ces bras, le tronçon arrière (10) comportant deux sabots (13) adaptés à recevoir en butée ce tronçon avant (11) en une configuration basculée vers l'arrière de celui-ci et un dispositif de verrouillage pour l'assujettissement de la charge sur ce tronçon arrière, cette potence étant caractérisée en ce qu'elle comporte deux moyeux coaxiaux (20) traversant transversalement ces sabots (13) et une pluralité de paires de perçages (21, 22, 23) disposées en arrière des sabots, ledit dispositif de verrouillage (30, 50, 70) étant fixé de façon amovible à ce tronçon arrière, étant au choix:
- un dispositif (30) comportant des arceaux (31) en saillie vers le haut et liés aux sabots par des arbres (33) traversant ces moyeux (20) et adaptés à recevoir des doigts de verrouillage (102) fixés sous la charge en saillie vers l'avant,
- un dispositif en U (50) comportant une portion transversale (51) fixée au tronçon arrière (10) à la fois par des arbres (56) traversant lesdits moyeux (20) et par des boulons (53) traversant au moins une paire de ladite pluralité de perçages, et des branches (57) orientées vers l'avant et portant des griffes (58) adaptées à venir en prise avec des organes complémentaires de verrouillage (203) ménagés sous la charge (200),
- ou un dispositif (70) comportant une traverse (51) fixée au tronçon arrière (10) par des boulons (72) traversant au moins une paire de ladite pluralité de paire de perçages et munie en ses extrémités de doigts pivotants en porte-à-faux (73) mobiles autour d'axes verticaux entre une configuration dans laquelle ils sont orientés longitudinalement et une configuration de verrouillage dans laquelle ils sont orientés transversalement l'un vers l'autre en sorte de pouvoir coiffer des ailes (204) ménagées sous la charge.

2. Potence de manutention selon la revendication 1, caractérisée en ce que ladite pluralité de paires de perçages est ménagée en arrière des sabots (13).

3. Potence de manutention selon la revendication 1 ou la revendication 2, cette pluralité de paires de perçages (21, 22, 23) est ménagée sur des ailes latérales (18) du tronçon arrière.

4. Potence de manutention selon l'une quelconque des revendications 1 à 3, caractérisée en ce que cette pluralité comporte trois paires de perçages.

5. Potence de manutention selon l'une quelconque des revendications 1 à 4, caractérisée en ce que le dispositif de verrouillage (30) comportant les arceaux (31) est monté pivotant autour de ses arbres entre une configuration rabattue vers l'arrière et une configuration de service dans laquelle il est ramené par des moyens de rappel élastique (34).

6. Potence de manutention selon l'une quelconque des revendications 1 à 4, caractérisée en ce que le dispositif de verrouillage en U a ses griffes (58) qui lui sont rapportées par boulonnage.

7. Potence de manutention selon la revendication 6, caractérisée en ce que les branches (57) comportent plusieurs jeux de perçages (59) adapltés à la fixation par boulonnage des griffes.

8. Potence de manutention selon l'une quelconque des revendications 1 à 4, caractérisée en ce que le dispositif (70) comportant une traverse (51) munie en ses extrémités de doigts pivotants (73) comporte des vérins rotatifs (74) pour la commande en rotation de ces doigts.

## Patentansprüche

1. Ausleger zum Aufladen und zum Abladen einer Ladung (100, 200) auf ein bzw. von einem Nutzfahrzeug, mit einem unteren Arm (6), der einen hinteren Abschnitt (10) zum Verschwenken an der Rückseite des Fahrzeug-Fahrgestells um eine zu diesem quer verlaufende Achse sowie einen vorderen Abschnitt (11) aufweist, der an diesem hinteren Abschnitt um eine zweite Querachse (12) verschwenkbar angebracht ist und an seinem vorderen Ende einen vertikalen Arm (8) trägt, der an seinem oberen Ende mit einem Greifhaken (9) abschließt, der dazu eingerichtet ist, mit der Ladung in Eingriff zu kommen, ferner mit einer Betätigungseinrichtung (15) für diese Arme, wobei der hintere Abschnitt (10) zwei Stützschuhe (13) aufweist, die dazu eingerichtet sind, diesen vorderen Abschnitt (11) in einer von diesem nach hinten verschwenkten Anordnung abstützend aufzunehmen, sowie eine Verriegelungseinrichtung zur Befestigung der Ladung auf diesem hinteren Abschnitt umfaßt, wobei dieser Ausleger **dadurch gekennzeichnet** ist, daß er zwei zueinander koaxiale Naben (20), welche diese Stützschuhe (13) in Querrichtung durchlaufen, und eine Mehrzahl von Bohrungspaaren (21, 22, 23) aufweist, die hinter den Stützschuhen angeordnet sind, wobei die Verriegelungseinrichtung (30, 50, 70) lösbar an diesem hinteren Abschnitt befestigt und wahlweise:
- eine Einrichtung (30) mit Bügeln (31) ist, die nach oben vorspringen und mit den Stützschuhen über diese Naben (20) durchquerende Achsen (33) verbunden und zur Aufnahme von Verriegelungsfingern (102) eingerichtet sind, die unter der Ladung nach vorne auskragend befestigt sind,
- eine U-förmige Einrichtung (50) ist, die einen quer verlaufenden Abschnitt (51), der am hinteren Abschnitt (10) zugleich durch die besagten Naben (20) durchquerende Achsen (56) und durch Schraubbolzen (53) befestigt ist, die durch wenigstens ein Paar aus der Mehrzahl von Bohrungen hindurchragen, und Arme (57) aufweist, die nach vorne gerichtet sind und Klauen (58) tragen, die dazu eingerichtet sind, mit komplementären, unter der Ladung (200) angeordneten Verriegelungsorganen (203) in Eingriff zu kommen,
- oder eine Einrichtung (70) mit einer Traverse (51) ist, die am hinteren Abschnitt (10) mit Schraubenbolzen (72) befestigt ist, die durch wenigstens ein Paar aus besagter Mehrzahl von Bohrungspaaren hindurchragen, und die an ihren Enden mit auskragenden, drehbaren Fingern (73) versehen ist, die um vertikale Achsen zwischen einer Anordnung, bei der diese in Längsrichtung ausgerichtet sind, und einer Verriegelungsanordnung, bei der diese in Querrichtung aufeinander ausgerichtet sind, hin und her so bewegbar sind, daß sie unter der Ladung angeordnete Flansche (204) überdecken können.

2. Ausleger nach Anspruch 1, dadurch gekennzeichnet, daß die Mehrzahl von Bohrungspaaren hinter den Stützschuhen (13) ausgebildet ist.

3. Ausleger nach Anspruch 1 oder Anspruch 2, wobei die Mehrzahl von Bohrungspaaren (21, 22, 23) auf seitlichen Flanschen (18) des hinteren Abschnitts angeordnet ist.

4. Ausleger nach einem der Ansprüche 1 bis 3, dadurch gekennzeichnet, daß diese Mehrzahl drei Bohrungspaare umfaßt.

5. Ausleger nach einem der Ansprüche 1 bis 4, dadurch gekennzeichnet, daß die die Bügel (31) aufweisende Verriegelungseinrichtung (30) um ihre Achsen verschwenkbar zwischen einer nach hinten geklappten Anordnung und einer Gebrauchslage befestigt ist, in die sie durch elastische Rückstellmittel (34) zurückgeführt wird.

6. Ausleger nach einem der Ansprüche 1 bis 4, dadurch gekennzeichnet, daß die U-förmige Verriegelungseinrichtung Klauen (58) aufweist, die an ihr durch Schraubverbindungen befestigt sind.

7. Ausleger nach Anspruch 6, dadurch gekennzeichnet, daß die Arme (57) mehrere Sätze von Bohrungen (59) aufweisen, die zur Befestigung der Klauen durch Verschraubung dienen.

8. Ausleger nach einem der Ansprüche 1 bis 4, dadurch gekennzeichnet, daß die Einrichtung (70), die eine an ihren Enden mit drehbaren Fingern (73) versehene Traverse (51) aufweist, Dreh-Verstelleinrichtungen (74) zur Drehbetätigung dieser Finger umfaßt.

## Claims

1. Handling jib adapted for loading and unloading a load (100, 200) on an industrial vehicle, comprising a lower arm (6) having a rear section (10) adapted to be articulated at the rear of the chassis of the vehicle about an axis transverse to the latter and a front section (11) articulated on this rear section about a second transverse axis (12) and carrying at its front end a verticle arm (8) terminating at its top end in a gripping hook (9) adapted to engage with the load, a device (15) for manoeuvring these arms, the rear section (10) having two saddles (13) adapted to act as a stop for this front section (11) in a configuration in which the latter is tilted towards the rear, and a locking device for fixing the load to this rear section, this jib being characterised in that it includes two coaxial hubs (20) passing transversely through these saddles (13) and a plurality of pairs of bores (21, 22, 23) disposed to the rear of the saddles, the said locking device (30, 50, 70) being fixed removably to this rear section, being as desired:
- a device (30) comprising arches (31) projecting upwards and connected to the saddles by shafts (33) passing through these hubs (20) and adapted to receive locking pins (102) fixed below the load and projecting towards the front,
- a U-shaped device (50) having a transverse portion (51) fixed to the rear section (10) both by shafts (56) passing through the said hubs (20) and by bolts (53) passing through at least one pair of the said plurality of bores, and legs (57) oriented towards the front and bearing claws (58) adapted to engage with complementary locking members (203) provided below the load (200),
- or a device (70) comprising a cross member (51) fixed to the rear section (10) by bolts (72) passing through at least one pair of the said plurality of pairs of bores and provided at its ends with projecting pivoting pins (73) able to move about vertical axes between a configuration in which they are oriented longitudinally and a locking configuration in which they are oriented transversely towards one another so as to be able to fit on top of flanges (204) provided below the load.

2. Handling jib according to Claim 1, characterised in that the said plurality of pairs of bores is provided at the rear of the saddles (13).

3. Handling jib according to Claim 1 or Claim 2, this plurality of pairs of bores (21, 22,23) is provided on lateral flanges (18) of the rear section.

4. Handling jib according to any one of Claims 1 to 3, characterised in that this plurality comprises three pairs of bores.

5. Handling jib according to any one of Claims 1 to 4, characterised in that the locking device (30) comprising the arches (31) is mounted so as to pivot about its shafts between a configuration in which it is folded down towards the rear and an operating configuration in which it is returned by elastic restoring means (34).

6. Handling jib according to any one of Claims 1 to 4, characterised in that the U-shaped locking device has claws (58) which are attached to it by bolting.

7. Handling jib according to Claim 6, characterised in that the legs (57) have several sets of bores (59) adapted to fix the claws by bolting.

8. Handling jib according to any one of Claims 1 to 4, characterised in that the device (70) comprising a cross member (51) provided at its ends with pivoting pins (73) has rotary jacks (74) for controlling these pins with respect to rotation.
